# EUROPEAN PATENT APPLICATION

(11) **EP 4 819 580 A1**
(43) Date of publication of application: **07.10.2026**
(21) Application number: 25794987.5
(22) Date of filing: 14.04.2025
(51) Int. Cl.: H04L 65/65, H04L 65/1069, H04L 65/1063, H04L 47/26, H04W 88/14

(54) **METHOD AND APPARATUS FOR LOW LATENCY MEDIA STREAMING IN WIRELESS COMMUNICATION SYSTEM**

(30) Priority: 24.04.2024 KR 20240054954
(71) Applicant: Samsung Electronics Co., Ltd., Suwon-si, Gyeonggi-do 16677 (KR)
(72) Inventor: YANG, Hyunkoo, Suwon-si, Gyeonggi-do 16677 (KR); LEE, Hakju, Suwon-si, Gyeonggi-do 16677 (KR)
(74) Representative: Nederlandsch Octrooibureau
(86) International application number: PCT/KR2025/005044
(87) International publication number: WO 2025/225947

(57) **Abstract**

The present disclosure relates to a 5G or 6G communication system for supporting higher data transmission rates. A method performed by a terminal in a wireless communication system, according to embodiments of the present disclosure, comprises the steps of: transmitting, to a data network (DN) entity, a dynamic policy configuration request for a downlink streaming service on the basis of a policy template; and identifying the result of the dynamic policy configuration request, wherein the policy template can include information about low latency low loss scalable throughput (L4S) support.

## Description

### [Technical Field]

The disclosure relates to a wireless communication system and, particularly, to a method and an apparatus for supporting low-latency media streaming.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure sets forth a measure to support low-latency media streaming in a wireless communication system.

### [Solution to Problem]

In view of the foregoing aspect, a method performed by a UE in a wireless communication system according to embodiments of the disclosure may include transmitting, to a data network (DN) entity, a dynamic policy configuration request for a downlink streaming service based on a policy template, and identifying a result of the dynamic policy configuration request, wherein the policy template may include information about low latency, low loss, and scalable throughput (L4S) support.

### [Advantageous Effects of Invention]

According to embodiments of the disclosure, there may be provided a method and an apparatus for a low-latency media streaming service supporting L4S in a wireless communication system.

### [Brief Description of Drawings]

FIG. 1 is a schematic diagram illustrating a 5G system (5GS) for a low-latency media streaming service in a wireless communication system according to various embodiments of the disclosure.
FIG. 2 is a schematic diagram illustrating a generalized media delivery architecture for providing a media service in a wireless communication system according to various embodiments of the disclosure.
FIG. 3 is a schematic diagram illustrating an ECN code point according to various embodiments of the disclosure.
FIG. 4 is a schematic diagram illustrating an L4S architecture according to various embodiments of the disclosure.
FIG. 5 is a schematic diagram illustrating a media delivery architecture based on a 5G system to which L4S is applied according to various embodiments of the disclosure.
FIG. 6 is a diagram llustrating an example of a procedure for providing a downlink streaming service supporting L4S according to various embodiments of the disclosure.
FIG. 7 illustrates a structure of a UE according to various embodiments of the disclosure.
FIG. 8 illustrates a structure of a network entity according to various embodiments of the disclosure.

### [Best Mode for Carrying out the Invention]

Hereinafter, embodiments of the disclosure will be described in detail with reference to the accompanying drawings. In describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of flowchart illustrations, and combinations of blocks in the flowchart illustrations, may be performed based on computer program instructions. These computer program instructions may be loaded collectively onto at least one processor of a general purpose computer, special purpose computer, or other programmable data processing apparatus to produce a machine, such that the instructions, which perform through any one of, or in any combination of, the at least one processor of the computer or other programmable data processing apparatus, create means for performing the functions specified in the flowchart block(s). These computer program instructions may also be stored in a non-transitory computer usable or computer-readable memory that may direct a computer or other programmable data processing apparatus to function in a particular manner, such that the instructions stored in the computer usable or computer-readable memory produce an article of manufacture including instruction means that perform the function specified in the flowchart block(s). The computer program instructions may also be loaded onto a computer or other programmable data processing apparatus to cause a series of operational steps to be performed on the computer or other programmable data processing apparatus to produce a computer executed process such that the instructions that perform on the computer or other programmable data processing apparatus provide steps for executing the functions specified in the flowchart block(s).

Further, each block may represent a module, segment, or portion of code, which includes one or more executable instructions for executing the specified logical function(s). It should also be noted that in some alternative implementations, the functions noted in the blocks may occur out of the order. For example, two blocks(or functions) shown in succession may in fact be performed substantially concurrently or the blocks may sometimes be performed in the reverse order, depending upon the functionality involved.

As used in embodiments of the disclosure, a "~unit/module" may refer to a software element or a hardware element, such as a field programmable gate array (FPGA) or an application specific integrated circuit (ASIC), which performs a predetermined function. However, the term including the word "~unit/module" does not always have a meaning limited to software or hardware. The "~unit/module" may be constructed either to be stored in an addressable storage medium or to execute one or more processors. Therefore, the "~unit/module" includes, for example, software elements, object-oriented software elements, components such as class elements and task elements, processes, functions, properties, procedures, sub-routines, segments of a program code, drivers, firmware, micro-codes, circuits, data, database, data structures, tables, arrays, and parameters. The components and functions provided by the "~unit/module" may be either combined into a smaller number of components and a "~unit/module," or divided into additional components and a "~unit/module." Moreover, the components and "~units/modules" may be implemented to reproduce one or more central processing units (CPUs) within a device or a security multimedia card. Further, in the embodiments, the "^{~}unit/module" may include one or more processors.

In describing the disclosure below, a detailed description of known functions or configurations incorporated herein will be omitted when it is determined that the description may make the subject matter of the disclosure unnecessarily unclear.

For the same reason, in the accompanying drawings, some elements may be exaggerated, omitted, or schematically illustrated.

it will be understood that each block of flowchart illustrations, and combinations of blocks in the flowchart illustrations, may be performed based on computer program instructions. These computer program instructions may be loaded collectively onto at least one processor of a general purpose computer, special purpose computer, or other programmable data processing apparatus to produce a machine, such that the instructions, which perform through any one of, or in any combination of, the at least one processor of the computer or other programmable data processing apparatus, create means for performing the functions specified in the flowchart block(s). These computer program instructions may also be stored in a non-transitory computer usable or computer-readable memory that may direct a computer or other programmable data processing apparatus to function in a particular manner, such that the instructions stored in the computer usable or computer-readable memory produce an article of manufacture including instruction means that perform the function specified in the flowchart block(s). The computer program instructions may also be loaded onto a computer or other programmable data processing apparatus to cause a series of operational steps to be performed on the computer or other programmable data processing apparatus to produce a computer executed process such that the instructions that perform on the computer or other programmable data processing apparatus provide steps for executing the functions specified in the flowchart block(s).

Further, each block may represent a module, segment, or portion of code, which includes one or more executable instructions for executing the specified logical function(s). It should also be noted that in some alternative implementations, the functions noted in the blocks may occur out of the order. For example, two blocks(or functions) shown in succession may in fact be performed substantially concurrently or the blocks may sometimes be performed in the reverse order, depending upon the functionality involved.

As used herein, a base station is an entity that allocates resources to terminals, and may be at least one of a gNode B, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing communication functions. In the following description, 5G (NR) or a 5G (NR) system may be described by way of example, but the embodiments of the disclosure may also be applied to other communication systems having similar technical backgrounds or channel types. Moreover, based on determinations by those skilled in the art, the disclosure may also be applied to other communication systems through some modifications without significantly departing from the scope of the disclosure.

Hereinafter, embodiments of the disclosure will be described in detail in conjunction with the accompanying drawings.

The disclosure relates to a method and an apparatus for supporting low-latency media streaming in a mobile communication system. For example, the disclosure relates to a method and an apparatus for supporting low-latency media streaming, such as an XR service, in a mobile communication system that supports a low latency, low loss, and scalable throughput (L4S) function.

XR refers to a technology that provides interaction between a wearable device user and a machine through computer-generated content in a combined real and virtual environment. XR generates an extended reality by separately or jointly using virtual reality (VR) and augmented reality (AR) technologies. XR is expected to be applied to various fields, such as education, healthcare, and manufacturing. To realize XR, high-performance computing power and graphic processing capabilities are essential for displaying high-capacity real-time 3D images. Further, advancements in display technology are required, and technologies for high-efficiency transmission of large-scale data with ultra-low latency, such as 5G mobile communications, are a prerequisite.

An L4S architecture is a packet handling structure for an application service provided via the Internet, and provides low latency, low loss, and scalable throughput. A main purpose of L4S is to minimize packet queuing delay of devices located along a packet transmission path on the Internet. The L4S architecture may include a host, a network, and a protocol. The L4S host uses a scalable congestion control algorithm, and the L4S network manages an L4S packet and a general Internet packet (classic packet) by using separate queues. The L4S protocol uses identifiers that allow the host and the network to distinguish between an L4S packet and a classic packet, and is supported in a modified form of explicit congestion notification (ECN).

The L4S host that provides media streaming via the general Internet is unable to determine whether the L4S network is available before initiating a service. Therefore, for a predetermined time after initiation of the service, monitoring and verification procedures need to be performed to determine whether media streaming packets are transmitted through the L4S network. Since these procedures may cause performance instability during an initial stage of the service, and thus, a procedure is required to identify whether the L4S host and the L4S network of the LS4 architecture support the L4S protocol before the service is initiated.

According to various embodiments of the disclosure, latency-sensitive services, such as an XR service, may be smoothly provided by utilizing a low-latency media streaming structure including L4S.

A wireless communication system according to various embodiments of the disclosure may be, for example, a 5G system (5GS). The 5G system may include a 5G radio access network (next-generation radio access network: NG-RAN) and a 5G core network (5GC). The 5GS may interwork with existing LTE, and may also be connected to non-3GPP radio access technologies, such as Wi-Fi. The 5GC may be deployed between the NG-RAN and an external public data network (PDN), and may provide various types of data services including voice to a user. Control-plane components of the 5GC may be considered as virtualized network functions (VNFs), and communication between VNFs may be considered as one VNF providing a service to other VNFs through RESTful-based API exchanges. An API-based communication interface between VNFs is referred to as a service-based interface (SBI).

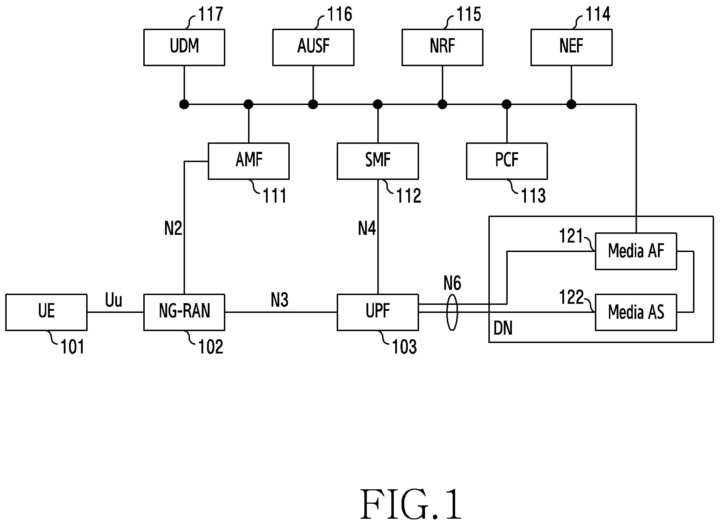

FIG. 1 is a schematic diagram illustrating a 5G system (5GS) for an XR service in a wireless communication system according to various embodiments of the disclosure.

Referring to FIG. 1, the 5GS may include a user equipment (UE) 101, an NG-RAN 102 including a base station, a user plane function (UPF) device 103, an access and mobility management function (AMF) device 111, a session management function (SMF) device 112, a policy control function (PCF) device 113, a network exposure function (NEF) device 114, an NF repository function (NRF) device 115, an authentication server function (AUSF) device 116, a unified data management (UDM) device 117, a media application function (media AF) device 121, and a media application server (media AS) device 122. The 5GS is not limited to the example, and may include a smaller or greater number of components than the components illustrated in FIG. 1. Each device may be referred to as a network entity, a network function, or a network function apparatus.

Referring to FIG. 1, each network function (NF) of the 5GS will be described as a "network entity" or as a "network function" itself. However, those skilled in the art may understand that an NF and/or an NF apparatus may be implemented on a single specific server or on two or more specific servers, and two or more NFs performing the same operation may be implemented on a single server.

In addition, according to the disclosure, a single NF or two or more NFs may be implemented in a form of a single network slice as needed. A network slice may be generated based on a specific purpose. For example, a network slice may be configured for a subscriber group to provide the same type of service, for example, a maximum transmission rate, data usage, and a guaranteed minimum transmission rate, to specific subscriber groups. In addition, a network slice may be implemented for various purposes. A network slice is well known to those of ordinary skill in the art, and thus a description thereof will be omitted.

Referring to FIG. 1, FIG. 1 illustrates an interface between nodes. A Uu interface may be used between the UE 101 and the NG-RAN 102, an N2 interface may be used between the NG-RAN 102 and the AMF 111, an N3 interface may be used between the NG-RAN 102 and the UPF 103, an N4 interface may be used between the SMF 112 and the UPF 103, and an N6 interface may be used between the UPF 103 and the media AF 121 and the media AS 122 deployed in a data network (DN). The interfaces are defined in 3GPP specifications, and thus a description thereof will be omitted. An interface between the media AF 121 and the media AS 122 and the UE will be described in a media architecture to be described below.

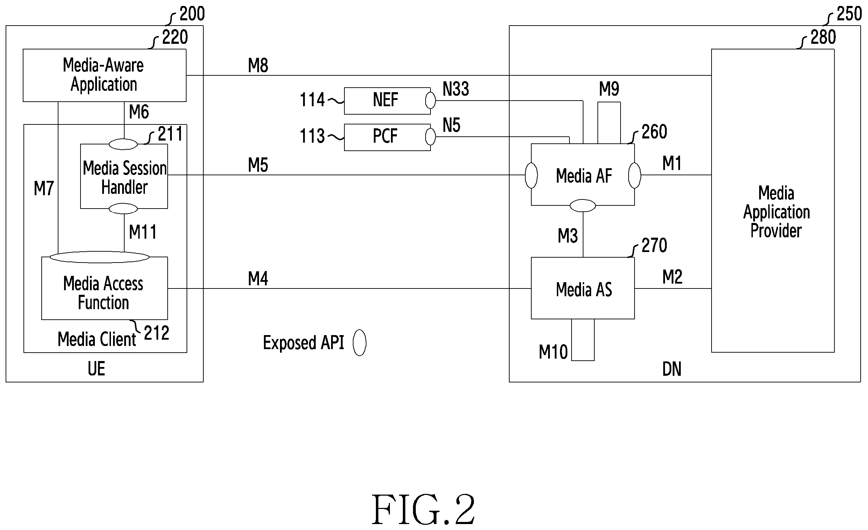

FIG. 2 is a schematic diagram illustrating a generalized media delivery architecture for providing a media service in a wireless communication system according to various embodiments of the disclosure.

Referring to FIG. 2, main functional elements of the generalized media delivery architecture are as follows.
- Media AF 260: An application function (AF) for providing media services
- Media AS 270: An application server for media transport
- Media Client 210: An internal function of a UE for media transport. The following subfunctions may be included as logical functions.

■ Media Session Handler 211: An internal function of the UE 200 that communicates with the media AF 260 to establish and control a media transport session
■ Media Access Function 212: An internal function of the UE 200 that communicates with the media AS 270 for access to and transmission of media content. The media access function may include detailed functions, such as a media transport protocol, a media codec, and a metadata processor.

Although FIG. 2 shows that the media session handler 211 and the media access function 212 provide APIs to each other via an M11 interface and provide APIs to a media-aware application 220 via M6 and M7 interfaces, respectively, functions of these functional elements may be provided by the media-aware application 220 or other components of the UE 200 depending on an implementation option, in which case the M11, M6, and M7 interfaces may not exist.
- Media-aware Application 220: An application operating in the UE 200, which may utilize at least one of the APIs provided by the media session handler 211 or the media access function 212 for media transport.

Referring to FIG. 2, the elements of the generalized media delivery architecture may communicate with each other via the following interfaces.
- M1: An interface between a media application provider 280 and the media AF 260, which may be used for media transport service provisioning.
- M2: An interface between the media application provider 280 and the media AS 270, which may be used to provide media data to the media AS 270 or to receive media data from the media AS 270
- M3: An interface between the media AF 260 and the media AS 270, which may be used for configuration of the media AS 270 or media session handling related to media transport.
- M4: An interface between the media access function 212 of the UE and the media AS 270, which may be used by the media access function 212 to receive media data from the media AS 270 or to transmit media data to the media AS 270
- M5: An interface between the media session handler 211 of the UE and the media AF 260, which may be used for media session handling related to media transport
- M6: An interface between the media-aware application 220 and the media session handler 211, which may be used for configuration of the media session handler 211
- M7: An interface between the media-aware application 220 and the media access function 212, which may be used to control the media access function 212
- M8: An interface between the media-aware application 220 of the UE and the media application provider 280, which may be used to control media application service logic
- M9: An interface between a first instance and a second instance of the media AF 260, which may be used for interworking between instances of the media AF.
- M10: An interface between a first instance and a second instance of the media AS 270, which may be used for media relay and handling between instances of the media AS
- M11: An interface between the media session handler 211 and the media access function 212, which may be used for configuration of the media session handler 211 or the media access function 212

Referring to FIG. 2, the media AF 260 and media AS 270 are functions located in a data network 250, and the media AF 260 and media AS 270 may communicate with the UE 200 through an N6 interface defined in the 5GS. A function (e.g., the media AF 260) located in an external DN of an operator may communicate with a 5G network function through an NEF 114 by using an N33 interface, and a function (e.g., the media AF 260) located in a trusted DN of the operator may directly communicate with the 5G network function. Referring to FIG. 2, the media AF 260 located in the trusted network of the operator may communicate with a PCF 113 by using an N5 interface. Communication between the media AF 260 and the NEF 114 or the PCF 113 may be a network service consumption process using an API provided by the NEF 114 or the PCF 113. For example, the media AF 260 may request configuration of a traffic handling policy including a quality-of-service (QoS) parameter for a media transport session between the media access function 212 of the UE 200 and the media AS 270 by using an Nnef_AFSessionWithQoS service provided by the NEF 114 or an Npcf_PolicyAuthoriztion service provided by the PCF 113. In another example, the media AF 260 may subscribe to a network event notification service, and may receive a notification when an associated situation occurs in a network. The event notification may be directly transmitted from a network function (e.g., the PCF 113 or a UPF 103) associated with the event to the media AF 260, or may be transmitted to the media AF 260 via the NEF 114.

A media service according to various embodiments of the disclosure may include the following two main scenarios.
- Downlink Streaming: The network provides media, and the UE uses the media.
- Uplink Streaming: The UE provides media, and the network uses the media.

The functions and interfaces of the generalized media delivery architecture illustrated in FIG. 2 may provide different functions for downlink streaming and uplink streaming. Hereinafter, for convenience of description, a function and an interface for downlink streaming will be expressed using a suffix "d," and a function and an interface for uplink streaming will be expressed using a suffix "u."

According to various embodiments of the disclosure, an L4S architecture is a packet handling structure for an application service provided via the Internet, and provides low latency, low loss, and scalable throughput. The L4S architecture may include a protocol, a network, and a host. The L4S host uses a scalable congestion control algorithm, and the L4S network manages an L4S packet and a general Internet packet (classic packet) by using separate queues. The L4S protocol uses identifiers that allow the L4S host and the L4S network to distinguish between an L4S packet and a classic packet, and is supported in a modified form of explicit congestion notification (ECN).

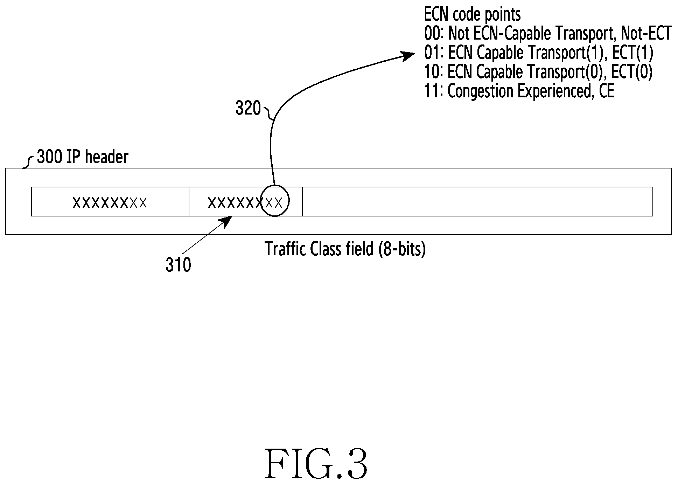

FIG. 3 is a schematic diagram illustrating an ECN code point according to various embodiments of the disclosure.

Referring to FIG. 3, last 2 bits of a traffic class field 310 included in an IP packet header 300 may be used for an ECN field 320. More specifically, ECN code points, which are candidate values that the ECN field may have, may be defined as follows.
- 00: Not ECN-Capable Transport, Not-ECT
- 01: ECN-Capable Transport(1), ECT(1)
- 10: ECN-Capable Transport(0), ECT(0)
- 11: Congestion Experienced, CE

When both a transmitting host and a receiving host participating in communication support ECN, the transmitting host transmits an IP packet by configuring an ECN field of an IP packet header to ECT(0) ('10') or ECT(1) ('01'). When a network located between the transmitting host and the receiving host supports ECN, if congestion occurs, the network device may transmit the IP packet by marking the ECN field of the IP packet header 300 with CE ("11"), instead of dropping the packet. Upon receiving the packet in which the ECN field is configured to CE ("11"), the receiving host may recognize that the congestion has occurred in the network, and may notify the transmitting host that the congestion has occurred in the network. Differences between an L4S protocol according to the disclosure and a legacy ECN protocol may be shown below in Table 1.

**[Table 1]**

| | ECN field configuration of transmitting host | CE configuration criterion for ECT field in network | Congestion control mechanism of transmitting host |
|---|---|---|---|
| Legacy ECN | ECT(0) | Network congestion equivalent to drop | Congestion control by treating CE packet as drop |
| L4S | ECT(1) | Mild network congestion | Proactive congestion control considering frequency/probability of CE packet |

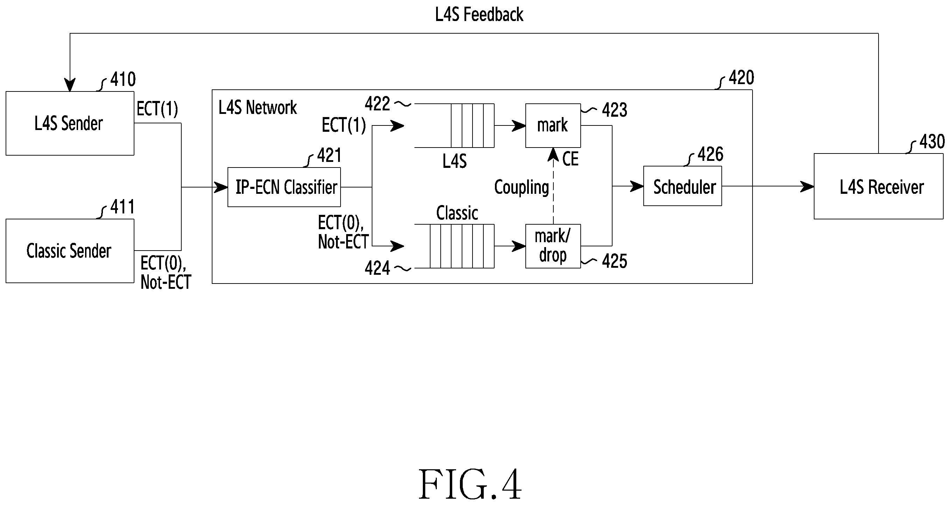

FIG. 4 is a schematic diagram illustrating an L4S architecture according to various embodiments of the disclosure.

Referring to FIG. 4, an L4S sender 410 transmits an IP packet to an L4S receiver 430 through an L4S network 420. An ECN field of the IP packet transmitted by the L4S sender 410 may be configured to ECT(1). Here, a classic sender 411 may also transmit an IP packet to a classic receiver (not illustrated) through the L4S network 420, and an ECN field of the IP packet transmitted by the classic sender 411 may be configured to ECT(0) or Not-ECT. Upon receiving the packet transmitted by the L4S sender 410 or the classic sender 411, the L4S network 420 may mark network congestion by changing the ECN field to Congestion Experienced (CE), or drop a specific packet according to a network congestion level. The L4S network 420 may operate separate handling pipelines for L4S traffic and for classic traffic. For example, referring to FIG. 4, the L4S network 420 may classify L4S traffic (ECT(1)) and classic traffic (ECT(0) or Not-ECT), based on an ECN field value, by using an IP-ECN classifier 421. An L4S packet classified based on the ECN field value is allocated to an L4S traffic queue 422, and the L4S network 420 performs marking 423 of changing the ECN field value to CE according to occupancy of the L4S traffic queue 422. Except for the L4S packet, the remaining classic traffic is allocated to a separate classic traffic queue 424, and the L4S network 420 performs marking of changing the ECN field value to CE (in a case of ECT(0)) or dropping (ECT(0) or Not-ECT) according to occupancy of the classic traffic queue 424 (425). Subsequently, packets that have not been dropped are transmitted to a scheduler 426, and finally transmitted to the L4S receiver 430.

The L4S receiver 430 may identify the ECN field value of the received IP packet, and may recognize that the network is in a congested situation when the ECN field value is configured to CE. In addition, the L4S receiver 430 may transmit information about network congestion to the L4S sender 410 by using L4S feedback. Upon receiving the information about the network congestion from the L4S receiver 430, the L4S sender 410 may operate a congestion control algorithm, based on the information about the network congestion. The L4S feedback may differ according to the type of a transmission protocol used to transmit media content. For example, when a TCP is used, an Ack frame may be used as the L4S feedback, when an RTP is used, an RTCP feedback message may be used as the L4S feedback, and when a QUIC protocol is used, an ECN count block of an Ack frame may be used as the L4S feedback.

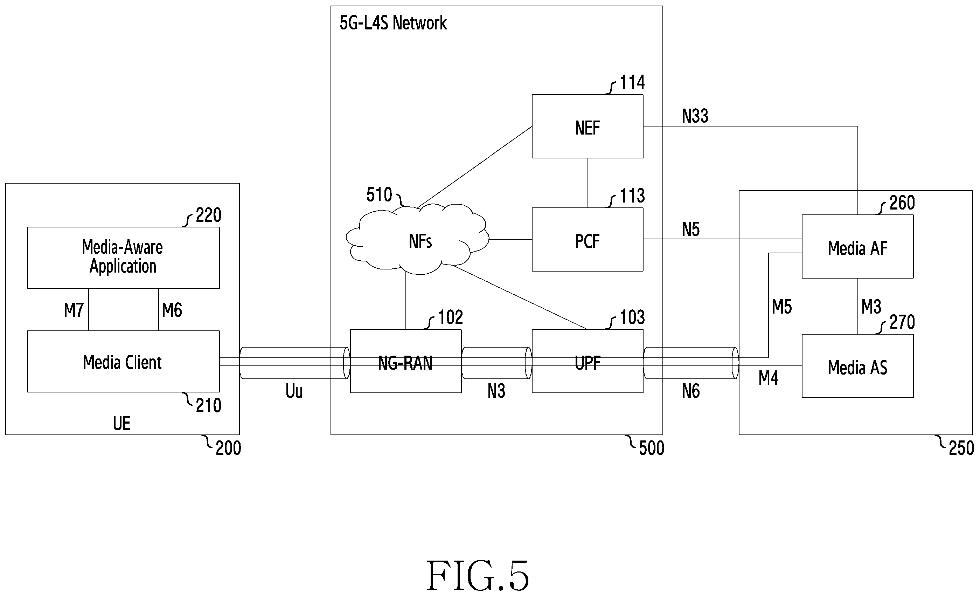

FIG. 5 is a schematic diagram illustrating a media delivery architecture based on a 5G system to which L4S is applied according to various embodiments of the disclosure. Referring to FIG. 5, a 5G-L4S network 500 may serve as the L4S network 420 of FIG. 4, and may notify a media AF 260 of L4S network-related information. For example, the 5G-L4S network may perform at least one of the following functions.
- Performing network congestion marking in an NG-RAN 102 or a UPF 103
- Specifying whether L4S is supported when configuring a media session parameter according to a request from the media AF 260
- Notifying the media AF 260 of a change in whether L4S is supported when an L4S support status changes due to a change in a network node, such as the NG-RAN 102 or the UPF 103
- Providing an L4S-related parameter, such as a ratio of a congested packet, to the media AF 260

Referring to FIG. 5, a UE 200 (or media client 210) and a media AS 270 may serve as the L4S sender 430 or the L4S receiver 410, respectively. For example, in a downlink streaming service, the media AS 270 may serve as the L4S sender 410, and the UE 200 (or the media client 210) may serve as the L4S receiver 430. In another example, in an uplink streaming service, the media AS 270 may serve as the L4S receiver 430, and the UE 200 (or the media client 210) may server as the L4S sender 410.

Referring to FIG. 5, the media AF 260 may be provided with media transport service configuration information including an L4S-related parameter from a media application provider 280 through an M1 interface, may configure at least one of the media client 210 and the media AS 270, based on the media transport service configuration information, and may request a PCF 113 or an NEF 114 to configure a traffic handling policy including an L4S-related parameter for a media transport session between the media client 210 and the Media AS 270.

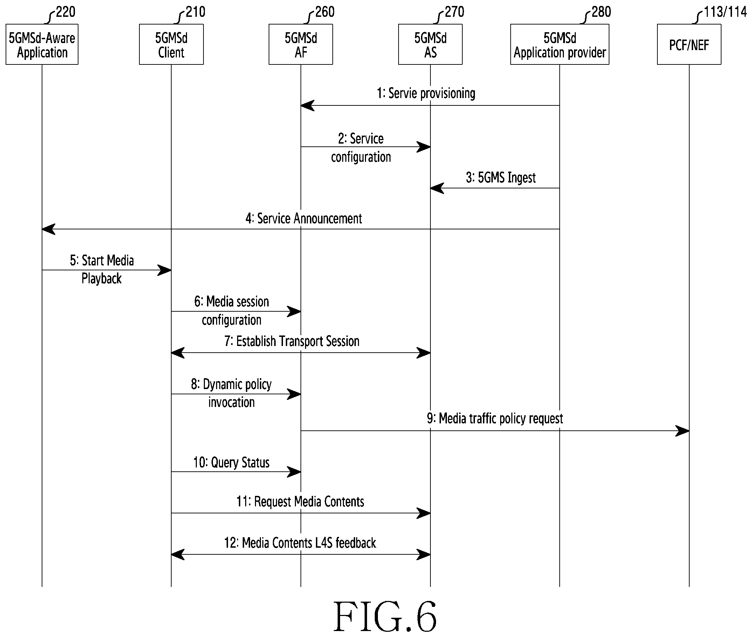

FIG. 6 a diagram llustrating an example of a procedure for providing a downlink streaming service supporting L4S according to various embodiments of the disclosure. Referring to FIG. 6, a downlink streaming service supporting L4S may be provided to a user according to the following procedure.
1. Service Provisioning: A 5GMSd application provider 280 may establish a provisioning session with a 5GMSd AF 260, and may configure a 5GMSd function for a downlink streaming service. The 5GMSd function may include a dynamic policy invocation, and provisioning information for configuring a dynamic policy invocation function may include L4S provisioning information.
2. AS Configuration: The 5GMSd AF 260 may configure a 5GMSd AS 270, based on the provisioning information. When the 5GMSd AS 270 is configured, L4S AS configuration information may be provided.
3. 5GMS Ingest: The 5GMSd application provider 280 may provide/transmit content for a downlink streaming service to the 5GMSd AS 270. Access information and media transport protocol configuration information about the 5GMSd AS 270 for providing/transmitting the content may be provided, as a result of provisioning, by the 5GMSd AF 260 to the 5GMSd application provider 280.
4. Service Announcement: The 5GMSd application provider 280 may transmit service announcement information to a 5GMSd-aware application 220 running on a user equipment (UE). The service announcement information may include service access information or a path for a 5GMSd client 210 running on the UE to obtain the service access information. The service access information may include a provisioning session identifier associated with the 5GMSd-aware application 220 and configuration information for a dynamic policy invocation.
5. Start Media Playback: The 5GMSd-aware application 220 may request the 5GMSd client 210 to obtain and play content selected by a user. Here, the service access information or the path for the 5GMSd client 210 to obtain the service access information may be transmitted.
6. Media Session Configuration: When the 5GMSd client 210 knows the path to obtain the service access information, the 5GMSd client 210 may obtain the service access information by using the path to obtain the service access information.
7. Establish Transport Session: A media transport session for obtaining media content may be established. In this case, a negotiation about whether to use L4S may be performed between the 5GMSd AS 270 and the 5GMSd client 210 according to a media transport protocol.
8. Dynamic Policy Invocation: The 5GMSd client 210 may request the 5GMSd AF 260 to configure a dynamic policy to be applied to the media transport session. A dynamic policy configuration request may include a provisioning session identifier, a service data flow description, and a policy template identifier. L4S dynamic policy information may be included in at least one of the service data flow description or a policy template.
9. Media Traffic Policy Request: The 5GMSd AF 260 may request a media transport traffic handling policy from a PCF 113 or an NEF 114. The media transport traffic handling policy may include at least one of whether L4S is supported and whether an L4S-related event notification service is subscribed to.
10. Query Stats: The 5GMSd client 210 may identify a result of dynamic policy configuration by inquiring with the 5GMSd AF 260 to. A response of the 5GMSd AF 260 to the inquiry of the 5GMSd client 210 may include information regarding a dynamic policy configuration situation (e.g., Accepted or Rejected) and a guideline on a dynamic policy (e.g., a bit rate or whether L4S is supported).
11. Request Media Contents: The 5GMSd client 210 may reconfigure an internal parameter of the 5GMSd client according to the response of the 5GMSd AF 260, and may request the 5GMSd AS 270 to transmit media content.
12. Media Contents/L4S Feedback: The 5GMSd AS 260 may transmit media data requested by the 5GMSd client 210 to the 5GMSd client 210 by using the media transport protocol. Upon receiving the media data, the 5GMSd client 210 may inspect an ECN field of a received IP packet, and may transmit, as L4S feedback, a result of inspecting the ECN field of the IP packet to the 5GMSd AS 260. For example, the L4S feedback may refer to a ratio of Congestion Experienced (CE)-marked packets among IP packets received at a specific time or in a packet serial number range. A specific format of the L4S feedback may vary according to the used media transport protocol. The 5GMSd AS 260 may operate a congestion control algorithm for media data transmission according to content of the received L4S feedback.

When the 5GMSd application provider 280 uses a media server operated autonomously by the 5GMSd application provider 280 instead of a media server operated by the 5GMSd AS 270, operations 2 and 3 described above may be performed as internal operations of the 5GMSd application provider 280. Operation 10 of Query Status described above may be performed not as a separate operation but as an operation in response to or subsequent to operation 8 of Dynamic Policy Invocation according to the API between the 5GMSd client 210 and the 5GMSd AF 260.

Although the above-described embodiments show that the 5GMSd client 210 requests the 5GMSd AF 260 to configure the dynamic policy, the 5GMSd AS 270 may request dynamic policy configuration according to a policy of a mobile communication service provider or a request from the 5GMSd application provider 280. In addition, the 5GMSd AS 270 may request L4S application from the 5GMSd AF 260 separately from the dynamic policy request, and a result thereof may be notified to the 5GMSd client.

A provisioning procedure for a media streaming service according to various embodiments of the disclosure may include processes of generating, obtaining, and updating a provision session resource by using a Rest-API or the like. Table 2 below illustrates an example of a provisioning session resource according to an embodiment of the disclosure.

**[Table 2]**

| Property name | Type | Cardinality | Description |
|---|---|---|---|
| provisioningSessionId | ResourceId | 1..1 | Unique identifier allocated to provisioning session |
| provisioningSessionType | ProvisioningSessionType | 1..1 | Provisioning session type, which may indicate downlink streaming or uplink streaming |
| externalServiceId | String | 1..1 | Identifier of service associated with provisioning session |
| aspId | AspId | 0..1 | Identifier of application service provider associated with provisioning session |
| appId | ApplicationId | 1..1 | Identifier of application associated with provisioning session |
| policyTemplateIds | arrya{ResourceId} | 0..1 | Policy template identifiers associated with provisioning session |
| edgeResourceConfigurationIds | array{ResourceId} | | Edge server configuration identifiers associated with provisioning session |
| protocolDescription | ProtocolDescription | 0..1 | Protocol-related information associated with provisioning session |
| ... | | | |

The provisioning session resource according to various embodiments of the disclosure may include L4S provisioning information. The L4S provisioning information may be included in a protocolDescription property and applied to the entire provisioning session, or may be included in a resource referenced by the provisioning session resource and applied only to a specific configuration. For example, the L4S provisioning information may be configured for each policy template or configured for each edge server configuration.

Table 3 below illustrates an example of a policy template resource according to various embodiments of the disclosure.

**[Table 3]**

| Property name | Type | Cardinality | Description |
|---|---|---|---|
| policyTemplateId | ResourceId | 1..1 | Identifier of policy template, having unique value within provisioning session. |
| state | string | 1..1 | Property indicating processing status of policy template. For example, this property may have values such as READY or PENDDING. |
| stateReason | ProblemDetails | 1..1 | Detailed information regarding processing status of policy template |
| externalReference | string | | Additional identifier for policy template, holding unique value within provisioning session. This property may be referenced by media transport-related metadata (e.g., HD_Premium or L4S). |
| applicationSessionContext | array(object) | 0..1 | Information about context of application session, which may include network slice identifier or data network identifier. |
| qoSSpecification | QoSSpecification | 0..1 | QoS information to be applied to media transport session associated with this policy template. This property may include information such as bit rate or packet loss rate. |
| chargingSpecification | CharginSpecification | 0..1 | Charging information to be applied to media transport session associated with this policy template |
| protocolDescription | ProtocolDescription | 0..1 | Protocol-related information associated with provisioning session |
| ... | | | |

A qoSSpecification property or a protocolDescription property of the policy template resource according to various embodiments of the disclosure may include L4S provisioning information.

The L4S provisioning information according to various embodiments of the disclosure may include at least one of the following pieces of information.
- l4sSupport: Whether L4S is supported. When included in the protocolDescription property, l4sSupport may indicate whether all media traffic associated with the provisioning session is supported. When included in the resource referenced by the provisioning session resource, l4sSupport may indicate whether media traffic associated with the resource is supported.
- fallbackPolicy: A policy for a case where L4S is not supported. fallbackPolicy may have a value such as mandatory support or optional support. When fallbackPolicy included in the protocolDescription property has a value of mandatory support, a media AF needs to establish a traffic transport path to an L4S-supporting NF (e.g., a UPF or an RAN). If this condition is not satisfied (i.e., if a traffic transport path to an L4S-supporting NF (e.g., a UPF or an RAN) fails to be established), the media AF may not provide the service. The value of the fallbackPolicy property included in the resource referenced by the provisioning session resource may be used as a criterion for selecting a specific policy template or configuration information.
- transportProtocol: Identifier(s) of a media transport protocol for supporting L4S. For example, an additional property for L4S feedback may be included depending on a transport protocol, such as TCP, RTP over UDP, QUIC, or SCTP. For example, when RTP over UDP is used, an identifier of an RTCP feedback message including L4S feedback may be further included.
- congestionCtrlScheme: An identifier of a congestion control algorithm used by an L4S sender, for example, Prague.
- congestionInfoRequired: Whether congestion information provided by a 5G NF, such as a UPF, is subscribed to.

The media AF according to various embodiments of the disclosure may configure a media AS, based on provisioning information including the L4S provisioning information. A media AS configuration procedure may include processes of generating, obtaining, and updating an AsResourceConfiguration resource by using a Rest-API or the like. The AsResouceConfiguration resource may include L4S AS configuration information including at least one of the following pieces of information.
- l4sSupport: Whether L4S is supported
- fallbackPolicy: A policy for a case where L4S is not supported. fallbackPolicy may have a value such as mandatory support or optional support. When L4S support is required, the value of the fallbackPolicy property may be used as a criterion for selecting a specific media AS.
- transportProtocol: Identifier(s) of a media transport protocol for supporting L4S. For example, an additional property for L4S feedback may be included depending on a transport protocol, such as TCP, RTP over UDP, QUIC, or SCTP. For example, when RTP over UDP is used, an identifier of an RTCP feedback message including L4S feedback may be further included.

congestionCtrlScheme: An identifier of a congestion control algorithm used by an L4S sender, for example, Prague.

congestionInfoRequired: Whether congestion information provided by a 5G NF, such as a UPF, is subscribed to.

An L4S dynamic policy request procedure for a media streaming service according to various embodiments of the disclosure may include processes of generating, obtaining, and updating a dynamic policy resource by using a Rest-API or the like. Table 4 below illustrates an example of a dynamic policy resource according to an embodiment of the disclosure.

**[Table 4]**

| Property name | Type | Cardinality | Description |
|---|---|---|---|
| dynamicPolicyId | ResourceId | 1..1 | Unique identifier of this dynamic policy |
| provisioningSessionId | ResourceId | 1..1 | Unique identifier of associated provisioning session |
| sessionId | MediaDeliverySessionId | 1..1 | Unique identifier of associated media transport session |
| policyTemplateId | ResourceId | 1..1 | Identifier of policy template applied to application data flow |
| serviceDataFlowDescriptions | array{ServiceDataF low Description} | 1..1 | Information about service data flow to which this dynamic policy is applied |
| mediaType | MediaType | 0..1 | Media format transmitted through application flow described in serviceDataFlowDescriptions |
| qoSSpecification | M5QoSSpecification | 0..1 | QoS requirements for this dynamic policy, which may include information such as bit rate, packet delay, or packet loss rate. |
| qoSEnforcement | boolean | 0..1 | Indicator indicating whether QoS requirements described in qoSSpecification are satisfied in 5G system |
| protocolDescription | ProtocolDescription | 0..1 | Protocol-related information for application flow described in serviceDataFlowDescriptions |
| ... | | | |

The dynamic policy resource according to various embodiments of the disclosure may directly include L4S dynamic policy information, or may include information (e.g., a resource identifier) regarding another resource including L4S dynamic policy information. The dynamic policy resource according to an embodiment of the disclosure may include an identifier of a policy template resource including L4S provisioning information as a policyTemplateId property, and the L4S provisioning information may be regarded as L4S dynamic policy information. The dynamic policy resource according to an embodiment of the disclosure may include L4S dynamic information as a property thereof, and the L4S dynamic policy information may be included as a sub-property of at least one of a serviceDataFlowDescriptions property, a qoSSpecification property, and a protocolDescription property. The dynamic policy resource according to an embodiment of the disclosure may include both one or more properties including L4S dynamic policy information and information (e.g., a resource identifier) about another resource including L4S dynamic policy information.

The L4S dynamic policy information according to the disclosure may include at least one of the following pieces of information as a component.
- l4sSupport: Whether L4S is supported. When included in the qoSSpecification property or the protocolDescription property, l4sSupport may indicate whether all application flows described in the serviceDataFlowDescriptions property are supported. When included in each ServiceDataFlowDescription of the serviceDataFlowDescriptions property, l4sSupport may indicate whether a service data flow described in the ServiceDataFlowDescription is supported.
- fallbackPolicy: A policy for a case where L4S is not supported. fallbackPolicy may have a value such as mandatory support or optional support.
- transportProtocol: Identifier(s) of a media transport protocol for supporting L4S. For example, an additional property for L4S feedback may be included depending on a transport protocol, such as TCP, RTP over UDP, QUIC, or SCTP. For example, when RTP over UDP is used, an identifier of an RTCP feedback message including L4S feedback may be further included.
- congestionCtrlScheme: An identifier of a congestion control algorithm used by an L4S sender, for example, Prague.
- congestionInfoRequired: Whether congestion information provided by a 5G NF, such as a UPF, is subscribed to.

The components of the L4S dynamic policy information may be provided in a distributed manner, across a property(s) of a dynamic policy resource including the L4S dynamic policy information and a property of another resource identified by a resource identifier. The dynamic policy resource according to an embodiment of the disclosure may redundantly include or reference the same components of the L4S dynamic policy information, in which case priority of duplicated component values may be determined according to a policy of a network service provider or an application provider.

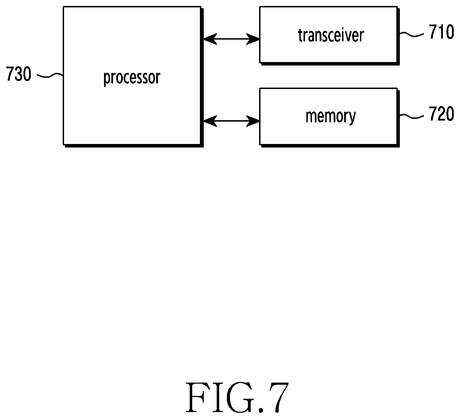

FIG. 7 illustrates a structure of a UE according to various embodiments of the disclosure.

Referring to FIG. 7, the UE according to an embodiment may include a transceiver (or transceiving unit) 710, a memory 720, and a processor 730. The transceiver 710, the memory 720, and the processor 730 of the UE may operate according to the above-described communication methods of the UE. However, components of the UE are not limited thereto. For example, the UE may include a larger or smaller number of components than the above-described components. Also, the processor 730, the transceiver 710, and the memory 720 may be implemented as a single chip. In addition, the processor 730 may include one or more processors. Also, the UE in FIG. 7 may correspond to the UE described n FIGS. 1, 2, 5, and 6.

The transceiver 710 refers to a UE receiver and a UE transmitter as a whole, and may transmit/receive signals with base stations or network entities. The signals transmitted/received with base stations or network entities may include control information and data. The transceiver 710 may include an RF transmitter for up-converting and amplifying the frequency of a transmitted signal and an RF receiver for low-noise amplifying and down-converting the frequency of a received signal. However, this is only an example of the transceiver 710, and the components of the transceiver 710 are not limited to the RF transmitter and the RF receiver.

In addition, the transceiver 710 may receive signals through a radio channel, output the same to the processor 730, and transmit signals output from the processor 730 through the radio channel. The memory 720 may store programs and data necessary for the operation of the UE. In addition, the memory 720 may store control information or data included in signals acquired by the UE. The memory 720 may be storage media, such as a read-only memory (ROM), a random access memory (RAM), a hard disk, a CD-ROM, and a DVD, or a combination of storage media.

The processor 730 may control a series of processes to operate the UE. For example, the transceiver 710 may receive data signals including control signals, transmitted by base stations or network entities, and the processor 730 may determine results of receiving the control signals and the data signals transmitted by the base stations or network entities.

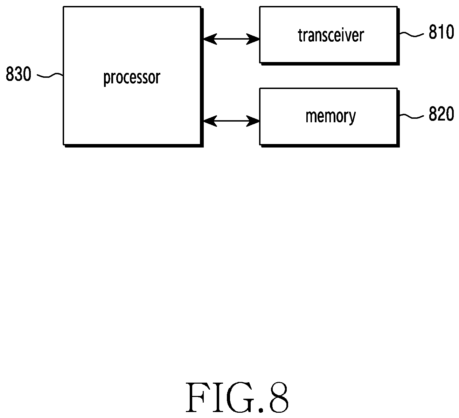

FIG. 8 illustrates a structure of a network entity according to various embodiments of the disclosure.

Referring to FIG. 8, the network entity according to an embodiment may include a transceiver 810, a memory 820, and a processor 830. The transceiver 810, the memory 820, and the processor 830 of the network entity may operate according to the above-described communication methods of the network entity. However, components of the network entity are not limited thereto. For example, the network entity may include a larger or smaller number of components than the above-described components. Also, the processor 830, the transceiver 810, and the memory 820 may be implemented as a single chip. In addition, the processor 830 may include one or more processors. Also, the network entity in FIG. 8 may correspond to the network entities described in FIGS. 1, 2, 5, and 6.

The transceiver 810 refers to a network entity receiver and a network entity transmitter as a whole, and may transmit/receive signals with UEs, base stations, or other network entities. The signals transmitted/received with UEs or network entities may include control information and data. The transceiver 810 may include an RF transmitter for up-converting and amplifying the frequency of a transmitted signal and an RF receiver for low-noise amplifying and down-converting the frequency of a received signal. However, this is only an example of the transceiver 810, and the components of the transceiver 810 are not limited to the RF transmitter and the RF receiver. In addition, the transceiver 810 may receive signals through a radio channel, output the same to the processor 830, and transmit signals output from the processor 830 through the radio channel.

The memory 820 may store programs and data necessary for the operation of the network entity. In addition, the memory 820 may store control information or data included in signals acquired by the network entity. The memory 820 may be storage media, such as a read-only memory (ROM), a random access memory (RAM), a hard disk, a CD-ROM, and a DVD, or a combination of storage media. The processor 830 may control a series of processes to operate the network entity as described above. For example, the transceiver 830 may receive data signals including control signals, transmitted by UEs or base stations, and the processor 830 may determine results of receiving the control signals and the data signals transmitted by the UEs or base stations. The network entity in FIG. 8 may include a base station.

According to an embodiment of the disclosure, a method of a service control device for supporting low-latency media streaming in a wireless communication system may include receiving low-latency media streaming service configuration information from an application service provider, configuring a low-latency media streaming server, receiving detailed information about a packet flow for a low-latency media streaming service from a UE or the low-latency media streaming server, and providing network configuration information for the low-latency media streaming service to a network.

Further, according to an embodiment of the disclosure, a method of a service control device for supporting low-latency media streaming in a wireless communication system may include receiving QoS and protocol information about a packet flow for a low-latency media streaming service from a UE or a low-latency media streaming server, and requesting a network to configure a QoS and protocol, based on the QoS and protocol information.

In addition, according to an embodiment of the disclosure, receiving information for configuring a QoS and protocol that a UE or a low-latency media streaming server may request from a media application provider may be included.

It should be noted that the configuration diagrams, illustrative diagrams of control/data signal transmission methods, and illustrative diagrams of operation procedures as illustrated in FIG. 1 to FIG. 6 are not intended to limit the scope of protection of the disclosure. That is, all the constituent units or operation steps shown in FIG. 1 to FIG. 67 should not be construed as essential elements for implementing the disclosure, and even when including only some of the elements, the disclosure may be implemented without impairing the true nature of the disclosure.

The above-described operations of the embodiments may be implemented by providing any unit of a device with a memory device storing corresponding program codes. That is, a controller in the device may perform the above-described operations by reading and executing the program codes stored in the memory device by means of a processor or central processing unit (CPU).

Various units or modules of an entity or terminal device set forth herein may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

Meanwhile, although specific embodiments of the present disclosure have been described in detail, various modifications may be made without departing from the scope of the present disclosure. Therefore, the scope of the present disclosure should not be limited to the described embodiments, but should be defined by the claims and equivalents thereof.

The electronic device which implements, operates, and performs various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic device according to an embodiment of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. In relation to the description of the drawings, similar reference numerals may be used for similar or related components. A singular form of a noun corresponding to an item may include one or more of the items, unless the relevant context clearly indicates otherwise. As used herein, each of such phrases as "A or B," "at least one of A and B," "at least one of A or B," "A, B, or C," at least one of A, B, and C,"and "at least one of A, B, or C," may include all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the module may be implemented in the form of an application-specific integrated circuit (ASIC).

Various embodiments as set forth herein may be implemented as software (e.g., a program) including one or more instructions that are stored in a storage medium (e.g., an internal memory or external memory) that is readable by a machine (e.g., an electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include codes generated by a compiler or codes executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play Store^{™}) or directly between two user devices (e.g., smartphones), or may be distributed online (e.g., downloaded or uploaded). If distributed online, at least part of the computer program product may be temporarily stored or produced in a machine-readable storage medium such as a manufacturer's server, a server of an application store, or the memory of a relay server.

According to various embodiments, each element (e.g., a module or a program) of the above-described elements may include a single entity or multiple entities, and some of the multiple entities may be separately disposed in any other element. According to various embodiments, one or more of the components or operations described above may be omitted, or one or more other components or operations may be added. Alternatively, or additionally, multiple components (e.g., modules or programs) may be integrated into a single component. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method performed by a terminal in a wireless communication system, the method comprising:
transmitting, to a data network (DN) entity, a dynamic policy configuration request for a downlink streaming service based on a policy template; and
identifying a result of the dynamic policy configuration request,
wherein the policy template comprises information about low latency, low loss, and scalable throughput (L4S) support.

2. The method of claim 1, further comprising:
establishing a media transport session for media content with the data network entity; and
transmitting a transmission request for the media content to the data network entity.

3. The method of claim 2, further comprising:
receiving the media content from the data network entity; and
transmitting, to the data network entity, a result of inspecting an explicit congestion notification (ECN) field of an IP packet associated with the media content.

4. The method of claim 1, wherein the information about the L4S support is included in one of a qoSSpecification property or a protocolDescription property of the policy template.

5. A method performed by a data network entity in a wireless communication system, the method comprising:
receiving a policy template comprising information about low latency, low loss, and scalable throughput (L4S) support; and
receiving, from a terminal, a dynamic policy configuration request for a downlink streaming service based on the policy template.

6. The method of claim 5, further comprising:
requesting a media transport traffic handling policy from a policy control function (PCF) entity or a network exposure function (NEF) entity;
establishing a media transport session for media content with the terminal; and
receiving a transmission request for the media content from the terminal.

7. The method of claim 6, further comprising:
transmitting the media content to the terminal; and
receiving, from the terminal, a result of inspecting an explicit congestion notification (ECN) field of an IP packet associated with the media content.

8. The method of claim 5, wherein the information about the L4S support is included in one of a qoSSpecification property or a protocolDescription property of the policy template.

9. A terminal in a wireless communication system, the terminal comprising:
a transceiver; and
a controller connected to the transceiver,
wherein the controller is configured to:
transmit, to a data network (DN) entity, a dynamic policy configuration request for a downlink streaming service based on a policy template; and
identify a result of the dynamic policy configuration request, and
wherein the policy template comprises information about low latency, low loss, and scalable throughput (L4S) support.

10. The terminal of claim 9, wherein the controller is configured to:
establish a media transport session for media content with the data network entity; and
transmit a transmission request for the media content to the data network entity.

11. The terminal of claim 10, wherein the controller is configured to:
receive the media content from the data network entity; and
transmit, to the data network entity, a result of inspecting an explicit congestion notification (ECN) field of an IP packet associated with the media content.

12. The terminal of claim 9, wherein the information about the L4S support is included in one of a qoSSpecification property or a protocolDescription property of the policy template.

13. A base station in a wireless communication system, the base station comprising:
a transceiver; and
a controller connected to the transceiver,
wherein the controller is configured to:
receive a policy template comprising information about low latency, low loss, and scalable throughput (L4S) support; and
receive, from a terminal, a dynamic policy configuration request for a downlink streaming service based on the policy template.

14. The base station of claim 13,
request a media transport traffic handling policy from a policy control function (PCF) entity or a network exposure function (NEF) entity;
establish a media transport session for media content with the terminal;
receive a transmission request for the media content from the terminal;
transmit the media content to the terminal; and
transmit, from the terminal, a result of inspecting an explicit congestion notification (ECN) field of an IP packet associated with the media content.

15. The base station of claim 13, wherein the information about the L4S support is included in one of a qoSSpecification property or a protocolDescription property of the policy template
